# EUROPEAN PATENT APPLICATION

(11) **EP 3 200 329 A1**
(43) Date of publication of application: **02.08.2017**
(21) Application number: 14902601.5
(22) Date of filing: 15.10.2014
(51) Int. Cl.: H02K 51/00

(54) **FIXED MAGNETIC GAP PERMANENT MAGNET SPEED GOVERNOR**

(30) Priority: 25.09.2014 CN 201420554495 U
(71) Applicant: Diao, Junqi, Huaiyin Jinan, Shandong 250022 (CN)
(72) Inventor: Diao, Junqi, Huaiyin Jinan, Shandong 250022 (CN)
(74) Representative: Grünecker Patent- und Rechtsanwälte PartG mbB
(86) International application number: PCT/CN2014/088653
(87) International publication number: WO 2016/045154

(57) **Abstract**

A fixed magnetic gap permanent magnet speed governor, comprising a cylindrical conductor rotor and a permanent magnet rotor disposed therein, the permanent magnet rotor comprises at least one permanent magnet, two length sides of the permanent magnet are an N pole and an S pole respectively, two magnetic pole end surfaces and two length sides of the permanent magnet are arranged with fixed magnetizers and movable magnetizers respectively, the fixed magnetizers and the movable magnetizers form a closed magnetic loop. Adopting the fixed magnet gap structure improves an engagement area of a speed governor and reduces assembling difficulty, saves a rare-earth material, and increases a torque transmission capability. The adoption of a magnetic circuit adjustment structure reduces the power consumption of an adjustment execution mechanism, maximally reduces the size of the adjustment execution mechanism, and reduces the overall size of the speed governor, thus reducing material consumption, saving installation space, and facilitating on-site installation.

## Description

### Technical field

The invention relates to a permanent magnet speed governor, specifically a fixed magnetic gap permanent magnet speed governor.

### Background technology

Permanent magnet speed governors realize speed regulation through the magnetic coupling of permanent magnet and realize the flexible (magnetic) connection of motors and loads, without any harmonic waves affecting power grid, with high reliability, and they can work in various severe environments such as high temperature, low temperature, humid environment, dirty environment, inflammable and explosive environment, unsteady voltage and thunder, greatly reducing mechanical vibration; they are widely used in power, iron and steel, metallurgy, petrochemical, paper-making, municipal engineering, ship, irrigation and mining industries. However, the existing commonly-used permanent magnet speed governors realize speed regulation through the adjustment of air gap, and the power consumption of magnetic circuit regulator is large, and there are shortcomings such as poor torque transmission capability, high difficulty in assembling and a waste of lots of rare earth resources.

### Content of Invention

As for the aforesaid problems, the present invention provides a fixed magnetic gap permanent magnet speed governor which can reduce the power consumption of magnetic circuit regulator, improve the torque transmission capability, reduces the difficulty in assembling and save rare earth resources.

The existing permanent magnet speed governors controls the degree that the conductor rotor cuts the magnetic line of force and thus realize the adjustment of torque through changes in the air gap between the conductor rotor and permanent magnetic rotor, and that method has many shortcomings. Based on the principle of electromagnetic field, the present invention designs a new permanent magnet speed governor from the perspective of keeping the magnetic gap unchanged and changing the magnetic reluctance, controls the magnetic intensity of permanent magnet externally displayed and thus realizes the goal of changing the torque.

In order to solve the aforesaid problems, the present invention adopts the following technical solutions: a fixed magnetic gap permanent magnet speed governor, comprising a cylindrical conductor rotor and a permanent magnet rotor disposed therein, the permanent magnet rotor is fixed to the driven shaft via a connecting rod, the said permanent magnet rotor comprises at least one permanent magnet, two length sides of the permanent magnet are an N pole and an S pole respectively, two magnetic pole end surfaces and two length sides of the permanent magnet are arranged with fixed magnetizers and movable magnetizers respectively, the fixed magnetizers and the movable magnetizers form a closed magnetic loop surrounding all permanent magnets therein, a magnetic circuit regulator is arranged on the movable magnetizers, the said magnetic circuit regulator is used to rotate the movable magnetizers, regulate the intensity of magnetic reluctance and thus change the magnetic intensity of permanent magnet externally displayed. When the conductor rotor rotates, it will form relative movement with the permanent magnet rotor, and the permanent magnetic field will produce eddy currents in the conductor rotor; meanwhile, eddy currents will produce an induced magnetic filed to interact with the permanent magnetic field, finally driving the permanent magnet rotor to rotate in the same direction as that of conductor rotor and thus driving the driven shaft which is connected to the permanent magnet rotor to rotate and output power. The power output is in direct proportion to the magnetic intensity (intensity of magnetic line of force) of the permanent magnet rotor, and the magnetic intensity of permanent magnet rotor is controlled by the magnetic circuit regulator, so it is possible to change the magnetism displayed externally by magnetic conductor through the control over the position of movable magnetizers by the magnetic circuit regulator, and thus lead to the variation in the speed of the conductor rotor and the driven shaft and finally realize the objective of speed regulation. The specific adjustment process is as follows: the movable magnetizers are rotated through the magnetic circuit regulator to the position where it can form closed magnetic circuit with the fixed magnetizers, and when all permanent magnets surround therein, the magnetic line of force successfully passes through the magnetizers, and the permanent magnet does not show magnetism externally; when the magnetic circuit regulator controls the movable magnetizers to rotate from near to far from the permanent magnet, the magnetism displayed externally by the permanent magnet changes from weak to strong until the fixed magnetizers are magnetized to the strong magnet of the corresponding magnetic pole.

In comparison with the change in the axial distance of the conductor rotor and the permanent magnet rotor, this method reduces the power consumption of magnetic circuit regulator and improves the torque transmission capability.

There are many installation directions for the permanent magnet, as long as they can ensure that when the conductor rotor rotates, it can cut the magnetic line of force, preferably the connecting line of two magnetic poles of the said permanent magnet is perpendicular to the driven shaft. The movable magnetizers are circumferentially arranged around the driven shaft.

Another preferable arrangement method for the permanent magnet is as follows: the connecting line of two magnetic poles of the said permanent magnet is parallel to the driven shaft. The permanent magnet is circumferentially arranged around the driven shaft.

A guide rail is installed under the movable magnetizers. The guide rail can be arranged along the parallel direction of the driven shaft, and can also be arranged along the perpendicular direction of the driven shaft. The magnetic circuit regulator controls the movable magnetizers to rotate along the guide rail thus changes the distance between the movable magnetizers and the permanent magnet and thus changes the intensity of magnetic reluctance.

The said magnetic circuit regulator comprises a regulating actuator used to control the rotation of movable magnetizers through receiving control signals.

The said regulating actuator can be electric actuator, pneumatic actuator or hydraulic actuator. During the use process, the permanent magnet speed governor is installed in a certain control system, and the pressure, flow, liquid level or other control signals are received and processed by the control system and are provided to the regulating actuator, and the regulating actuator rotates the movable magnetizers through its actuator, and thus changes the intensity of magnetic reluctance.

Since a fixed magnetic gap structure is adopted in the present invention, the engagement area of the speed governor is largely increased, and the assembly difficulty is reduced, thereby saving rare-earth materials and largely increasing the torque transmission capability. Since it adopts the magnetic circuit adjustment structure, the power consumption of an adjustment execution mechanism is greatly reduced and the size of the adjustment execution mechanism is reduced to the maximum extent, thus the overall size of the speed governor is greatly reduced, not only slowing consumption of materials and saving installation space, but also bringing convenience to the site installation construction.

### Brief description of the figures

Figure 1 is the front section view of closed magnetic loop of Embodiment 1;
Figure 2 is the A-A view of Embodiment 1;
Figure 3 is the front section view of non-cfosed magnetic loop of Embodiment 1;
Figure 4 is the front section view of closed magnetic loop of Embodiment 2;
Figure 5 is the B-B view of Embodiment 2;
Figure 6 is the front section view of non-closed magnetic loop of Embodiment 2;
Figure 7 is the schematic diagram of the present invention;

1. Conductor rotor, 2. Permanent magnet, 3. Driven shaft, 4. Fixed magnetizer, 5. Movable magnetizer, 6. Regulating actuator.

### Specific embodiments

### Embodiment 1

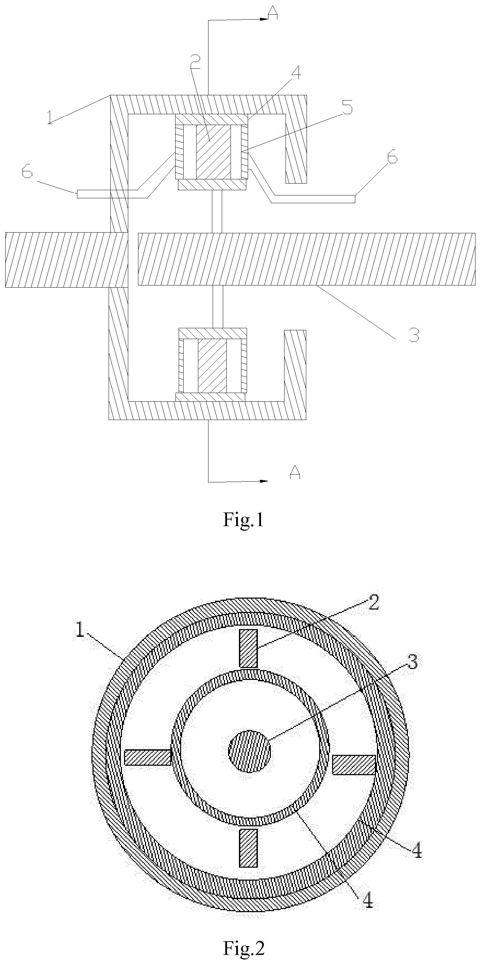

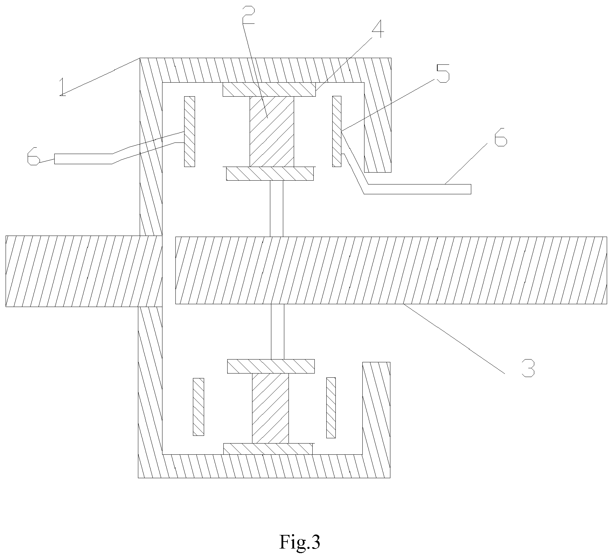

A fixed magnetic gap permanent magnet speed governor, as shown in Figure 1, Figure 2 and Figure 3, comprising a cylindrical conductor rotor 1 and a permanent magnet rotor disposed therein, the permanent magnet rotor is fixed to the driven shaft 3 via a connecting rod, the said permanent magnet rotor comprises four permanent magnets 2 that are circumferentially arranged around the driven shaft, the permanent magnet 2 has an N pole and an S pole at two length sides respectively, the connecting line of two magnetic poles of the said permanent magnet 2 is perpendicular to the driven shaft 3. Two magnetic pole end surfaces and two length sides of the permanent magnet 2 are arranged with fixed magnetizers 4 and movable magnetizers 5 respectively, the fixed magnetizers are an annular magnetic conductor arranged at two end sides of permanent magnet by passing the driven shaft, the movable magnetizers are an annular magnetic conductor arranged at two circumferential surface sides of permanent magnet by passing the driven shaft. The fixed magnetizers 4 and the movable magnetizers 5 comprise a closed magnetic loop surrounding all permanent magnets 2 therein, a guide rail parallel to the driven shaft is installed under the movable magnetizers 5, and there is a magnetic circuit regulator arranged in the movable magnetizers 5, the said magnetic circuit regulator is used to rotate the movable magnetizers 5, adjusting the intensity of magnetic reluctance and thus changing the magnetic intensity of the permanent magnet 2 externally displayed. The said magnetic circuit regulator comprises the regulating actuator 6 controlling the movable magnetizers 5 by receiving control signals. The said regulating actuator 6 can be electric actuator, pneumatic actuator or hydraulic actuator.

### Embodiment 2

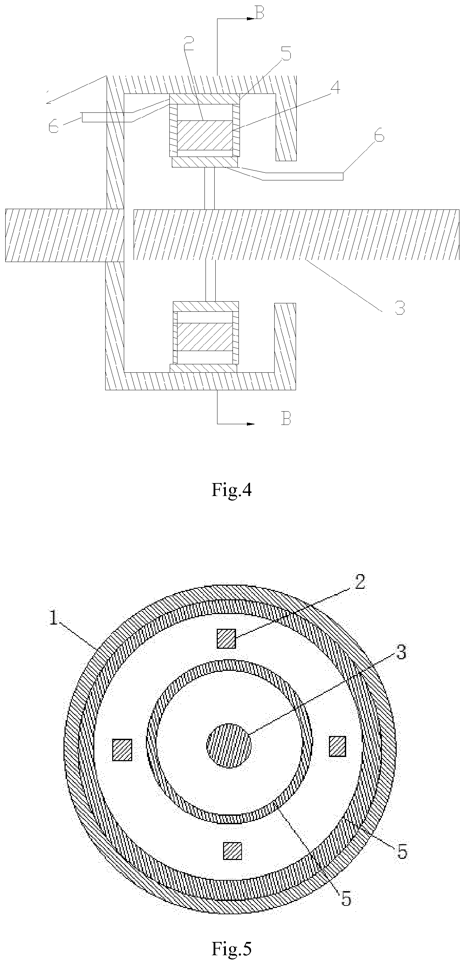

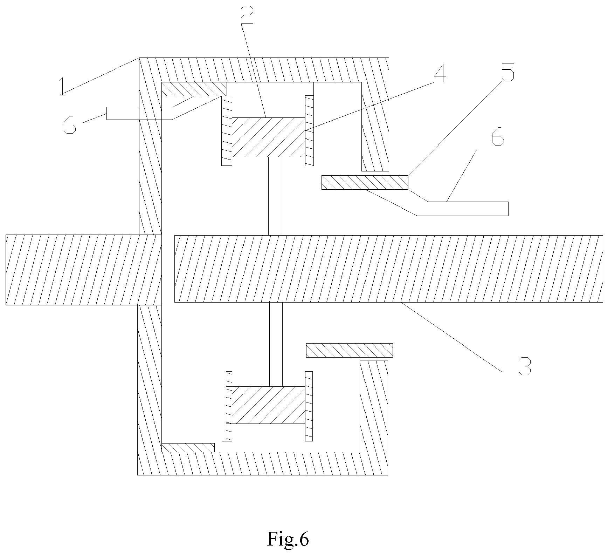

A fixed magnetic gap permanent magnet speed governor, as shown in Figure 4, Figure 5 and Figure 6, wherein the connecting line of two poles of the said permanent magnet 2 is parallel to driven shaft 3. Other structures are the same with Embodiment 1.

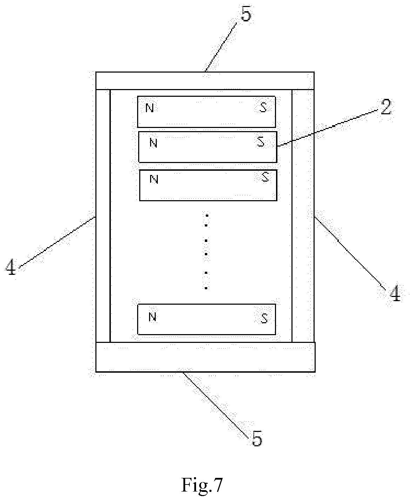

As shown in Figure 7, the principle of the present invention is to change the reluctance intensity of magnetic circuit through rotating the movable magnetizers 5, thus changing the magnetic intensity of the permanent magnet externally displayed.

It should be finally illustrated that: the aforesaid embodiments are only used to illustrate the technical solutions of the present invention, but not to restrict it. Although detailed illustrations for the present invention have been made based on aforesaid embodiments, common technical staff of corresponding fields should understand that they can still conduct revision or equivalent substitution for concrete embodiments of the present invention, and any revision or equivalent substitution not breaking away from the spirit and scope of the present invention should all be contained amid the claiming scope of the present invention.

## Claims

1. A fixed magnetic gap permanent magnet speed governor, comprising a cylindrical conductor rotor (1) and a permanent magnet rotor disposed therein, the permanent magnet rotor is fixed to the driven shaft (3) via a connecting rod, **characterized in that**:
the said permanent magnet rotor comprises at least one permanent magnet (2), two length sides of the permanent magnet (2) are an N pole and an S pole respectively, two magnetic pole end surfaces and two length sides of the permanent magnet (2) are arranged with fixed magnetizers (4) and movable magnetizers (5) respectively, the fixed magnetizers (4) and the movable magnetizers (5) form a closed magnetic loop surrounding all permanent magnets (2) therein, a magnetic circuit regulator is arranged on the movable magnetizers (5), the said magnetic circuit regulator is used to rotate the movable magnetizers (5), regulate the intensity of magnetic reluctance and thus change the magnetic intensity of permanent magnet (2) externally displayed.

2. The fixed magnetic gap permanent magnet speed governor according to Claim 1, **characterized in that** wherein the connecting line of two magnetic poles of the said permanent magnet (2) is perpendicular to the driven shaft (3).

3. The fixed magnetic gap permanent magnet speed governor according to Claim 1, **characterized in that** wherein the connecting line of two magnetic poles of the said permanent magnet (2) is parallel to the driven shaft (3).

4. The fixed magnetic gap permanent magnet speed governor according to Claim 1, **characterized in that** wherein there is a guide rail installed under the movable magnetizers (5).

5. The fixed magnetic gap permanent magnet speed governor according to one of the Claims 1-4, **characterized in that** wherein the said magnetic circuit regulator comprises the regulating actuator (6) used to control the movable magnetizers (5) by receiving control signals.

6. The fixed magnetic gap permanent magnet speed governor according to Claim 5, **characterized in that** wherein the said regulating actuator (6) can be electric actuator, pneumatic actuator or hydraulic actuator.
